# EUROPÄISCHE PATENTSCHRIFT

(11) **EP 2 844 412 B1**
(45) Veröffentlichungstag und Bekanntmachung des Hinweises auf die Patenterteilung: **30.11.2022**
(21) Anmeldenummer: 13708367.1
(22) Anmeldetag: 15.02.2013
(51) Int. Cl.: B22F 3/00, B22F 3/10

(54) **SINTEREINSATZ FÜR EINEN SINTEROFEN ZUM SAUERSTOFFFREIEN SINTERN VON METALL ODER KERAMIK**
SINTERED INSERT FOR A SINTERING FURNACE FOR THE OXYGEN-FREE SINTERING OF METAL OR CERAMIC MATERIAL
INSERT DE FRITTAGE POUR FOUR DE FRITTAGE DESTINÉ AU FRITTAGE SANS OXYGÈNE DU MÉTAL OU DE LA CÉRAMIQUE

(30) Priorität: 05.05.2012 DE 202012004493 U; 05.02.2013 DE 102013101105
(43) Veröffentlichungstag der Anmeldung: 11.03.2015
(73) Patentinhaber: WDT-Wolz-Dental-Technik GmbH, 55566 Bad Sobernheim (DE)
(72) Erfinder: WOLZ, Stefan, 55666 Bad Sobernheim (DE)
(74) Vertreter: Götz, Georg Alois
(86) Internationale Anmeldenummer: PCT/EP2013/053114
(87) Internationale Veröffentlichungsnummer: WO 2013/167289

(56) Entgegenhaltungen:
- WO-A1-92/11106
- DE-U1-202011 106 734
- DE-U1-202012 004 493
- US-A- 3 871 630
- US-A- 5 456 878

## Beschreibung

Die Erfindung betrifft ein Verfahren nach dem Oberbegriff der Ansprüche 1 und 5 für einen Sinterofen zum sauerstofffreien Sintern von Metall und/oder Keramik, insbesondere in der Dentaltechnik. Der Sintereinsatz weist ein Basisteil auf, das mit einem Abdeckmittel oder einer ersten Abdeckung, beispielsweise einem Deckel, einen Sinterraum bildet. Der Sinterraum ist mit einem oder mehreren Kanälen oder Rohren versehen, wodurch eine Verbindung vom Sinterraum zur Umgebung außerhalb des Sinterofens hergestellt ist. Die Erfindung wurde speziell für die Sinterung von pulvermetallurgisch hergestellten Rohlingen entwickelt, die ihre Form mittels eines CAD-CAM-Verfahrens oder mittels eines Injection-Molding-Verfahrens erhalten haben. Ebenfalls kann mit der Erfindung auch ein Ansintern der pulvermetallurgischen Rohlinge erreicht werden.

Bei der Herstellung von Sintermetallgegenständen aus Metallpulver ist es üblich, den Sintervorgang unter Schutzgasatmosphäre durchzuführen. Hierbei wird in der Regel Argon als billigstes Edelgas eingesetzt. Die Erfahrung mit diesem Verfahren hat aber gezeigt, dass selbst bei extremer Flutung des Innenraumes eines herkömmlichen Sinterofens noch Restsauerstoff vorhanden ist, der zur Verfärbung und Oxidation des Sinterobjekts führt. Daneben ist der benötigte Schutzgasbedarf nicht wirtschaftlich vertretbar.

Prinzipiell sind zwar schon Sinteröfen bekannt, die ein sauerstofffreies Sintern ermöglichen. Ein Einsatz dieser aufwendigen Öfen, die für wissenschaftliche Zwecke entwickelt wurden, verbietet sich schon aus Kostengründen in der Dentaltechnik.

Es wurden daher in letzter Zeit verschiedene Vorschläge gemacht, Sintervorrichtungen so auszugestalten, wie bei geringem Schutzgaseinsatz und Arbeitsaufwand eine zufrieden stellende Sinterung erzielt werden kann. Die Grundidee bei diesen Vorschlägen bestand darin, einen vom Sinterofen atmosphärisch getrennten Sinterraum vorzusehen. Beispiele hierfür sind in den Schriften DE 20 2010 002 533.8, DE 20 2010 007 606.4, DE 20 2011 005 465.9, WO 2011/020688 A1 und DE 20 2011 106 734.7 offenbart. Die Betriebserfahrung mit diesen Konstruktionen hat aber gezeigt, dass alle Ausführungsformen eine Schwachstelle aufweisen, die in der Abdichtung zwischen der Haube und der Bodenplatte liegt. Diese Abdichtung soll durch das Aneinanderpressen zweier Dichtflächen gewährleistet werden, die zumindest nach einigen Betriebszyklen undicht wird, selbst wenn die Dichtflächen anfänglich geläppt wurden.

Weiterhin ist ein Verfahren zum Sintern aus DE2020120044934U oder DE202011106734U1 bekannt.

Es ist daher Aufgabe der Erfindung ein Verfahren zum Sintern von Metall und/oder Keramik in einem Sinterofen mit einem atmosphärisch getrennten und mit Schutzgas beaufschlagbaren und/oder unter Vakuum setzbaren Sinterraum so auszubilden, dass in den Sinterraum kein Sauerstoff eindiffundieren kann.

Zur Lösung der Aufgabe werden die in den Ansprüchen 1 und 5 angegebenen Verfahren vorgeschlagen. Optionale vorteilhafte Ausgestaltungen der Erfindung ergeben sich aus den abhängigen Ansprüchen.

Das erfindungsgemäße Verfahren, das zum Sintern von Metall und/oder Keramik in einem Sinterofen insbesondere in der Dentaltechnik Verwendung findet, weist eine Verbindung von einem Sinterraum eines im Sinterofen angeordneten konischen Sintereinsatzes zur Umgebung außerhalb des Sinterofens auf. Die Verbindung ist mittels einem oder mehreren Kanälen oder Rohren hergestellt. Mit Hilfe von dieser Verbindung beziehungsweise einem oder mehreren Kanälen oder Rohren wird erfindungsgemäß der Sinterraum von den Verunreinigungen, wie zum Beispiel Sauerstoff, befreit beziehungsweise gereinigt.

Hierfür gibt es vier Möglichkeiten. Die erste Möglichkeit besteht darin, abwechselnd Schutzgas in den Sinterraum einzuführen und das Schutzgas mit etwaigen Verunreinigungen abzusaugen. Es wird somit erst Schutzgas eingeführt und anschließend abgesaugt. Für diese Möglichkeit würde ein Kanal oder Rohr ausreichen, da das Einführen von Schutzgas und Absaugen von Schutzgas mit Verunreinigungen nacheinander oder abwechselnd erfolgt.

Die zweite Möglichkeit hingegen besteht darin, zeitgleich Schutzgas in den Sinterraum einzuführen und Schutzgas mit Verunreinigungen abzusaugen. Um diese zweite Möglichkeit, zur selben Zeit oder simultan beziehungsweise gleichzeitig das Schutzgas in den Sinterraum einzuführen und abzuführen oder abzusaugen, nutzen zu können, werden mindestens zwei Kanäle oder Rohre benötigt.

Die dritte Möglichkeit besteht darin, beide vorigen Möglichkeiten, d.h. abwechselndes beziehungsweise nacheinander folgendes und zeitgleiches Einführen von Sauerstoff und Absaugen von Sauerstoff und den im Sinterraum vorherrschenden Verunreinigungen, aufeinander folgend oder abwechselnd durchzuführen. Das bedeutet, dass eine Kombination oder eine Abfolge der ersten und zweiten Möglichkeit statt finden kann, um ebenfalls eine sauerstofffreie beziehungsweise näherungsweise sauerstofffreie Sinteratmosphäre im Sinterraum eines Sintereinsatzes zu erzeugen. Hierfür werden, wie bereits auch bei der zweiten Möglichkeit beschrieben, mindestens zwei Kanäle oder Rohre benötigt.

Die vierte Möglichkeit besteht darin, eine Flüssigkeit in einen Teil des Sinterraums einzuführen und mittels der Verbindung abzusaugen oder abzuführen. Zum einen kann das Spülen des Sinterraums mit einer Flüssigkeit durchgeführt werden, um Verunreinigungen aus dem Sinterraum abzutransportieren oder heraus zu spülen. Zum anderen kann mittels des Spülens mit der Flüssigkeit, insbesondere Kühlflüssigkeit wie zum Beispiel Öl oder Wasser, ein schnelles Abkühlen des Sintereinsatzes erreicht werden. Der Abkühlvorgang kann mittels der einströmenden und ausströmenden Kühlflüssigkeit somit verkürzt werden. Zweckmäßig ist es den Abkühlprozess mittels Einbringen von Flüssigkeiten nach oder während dem Sintervorgang durchzuführen. Hierfür können alle bekannten Flüssigkeiten oder Gemische der einzelnen Flüssigkeiten verwendet werden. Beispielhaft kann die Kühlflüssigkeit durch Kanäle oder Rohre eingeführt und abgeführt werden, während durch andere Kanäle oder Rohre Schutzgas eingeführt und abgeführt bzw. abgesaugt wird. Das bedeutet, das Einbringen von Kühlflüssigkeit kann gleichzeitig mit dem Einbringen von Schutzgas verbunden werden. Jedoch ist es dabei zweckmäßig, dass der Sintereinsatz aus mehreren Kammern besteht, d.h. ein Mehrkammersystem aufweist. In der einen Kammer, die mit Schutzgas gespült wird oder eine annähernde Vakuumatmosphäre hergestellt wird, befinden sich die zu sinternden Teile/Objekte. Eine andere Kammer wird mit Kühlflüssigkeit gespült.

Folglich werden die Schritte in diesem Verfahren zum Sintern von Metall und/oder Keramik in einem Sinterofen, insbesondere zur Verwendung in der Dentaltechnik, bei dem eine Verbindung von einem Sinterraum eines im Sinterofen angeordneten Sintereinsatzes mittels einem oder mehreren Kanälen oder Rohren zur Umgebung außerhalb des Sinterofens hergestellt wird durchgeführt: abwechselnd wird Schutzgas in den Sinterraum eingeführt und Schutzgas mit etwaigen Verunreinigungen, beispielsweise Sauerstoff, mittels der Verbindung abgesaugt, oder zeitgleich wird Schutzgas in den Sinterraum eingeführt und Schutzgas mit etwaigen Verunreinigungen, beispielsweise Sauerstoff, mittels der Verbindung abgesaugt, oder die vorig aufgezählten Schritte werden aufeinander folgend oder abwechselnd durchgeführt, oder eine Flüssigkeit wird in den Sinterraum eingeführt und mittels der Verbindung abgesaugt.

Gemäß Erfindung wird ein Sintereinsatz mit einer internen Sinterkammer verwendet. Diese Sinterkammer wird mit Schutzgas gespült, und ein oder mehrere zu sinternde Teile/Objekte werden entbindert, während ein vorgeordneter Schutzraum vom Schutzgas geflutet wird. Das bedeutet, dass die zu sinternden Teile/Objekte in der Sinterkammer liegen, während diese mit Schutzgas gespült wird, um Verunreinigungen abzuführen. Des Weiteren werden die in der Sinterkammer sich befindenden zu sinternden Teile/Objekte entbindert. Der vor der internen Sinterkammer vorgeordnete Schutzraum wird ebenfalls mit dem Schutzgas gespült beziehungsweise vom Schutzgas geflutet.

Eine weitere beispielhafte Verfahrensvariante wird dadurch erreicht, dass nach und/oder während dem Entbinderungsprozess zusätzlich mit einer Vakuumpumpe das Schutzgas und Verunreinigungen, beispielsweise Sauerstoffreste, abgesaugt werden. Übrig gebliebene Sauerstoffreste werden somit von einer Pumpe, insbesondere einer Vakuumpumpe, während und/oder nach dem entbindern der zu sinternden Teile/Objekte abgepumpt oder abgesaugt.

Eine vorteilhafte Verfahrensweiterbildung wird erreicht, wenn mittels eines durch Vakuum erzeugten Unterdrucks eine Dichtigkeit zwischen einzelnen Bauteilen oder Komponenten des Sintereinsatzes herbeigeführt und/oder kompensiert wird. Dabei werden insbesondere Bauteile oder Komponenten, die den Sinterraum und/oder die Sinterkammer und/oder den Schutzraum einschließen, aneinander gesaugt. Ein Unterdruck wird demnach im Sintereinsatz durch das Absaugen von Schutzgas und/oder Sauerstoff und/oder eventuellen Verunreinigungen mittels einer Pumpe hervorgerufen, wodurch die Dichtflächen der einzelnen Bauteile oder Komponenten aneinander gesaugt oder gepresst werden.

Ebenfalls kann es zweckmäßig sein, einen Überdruck durch Einführen von Schutzgas im Sintereinsatz herbeizuführen. Beispielsweise wird der Druck innerhalb des Sintereinsatzes immer höher als der äußere Umgebungsdruck bzw. Atmosphärendruck gehalten. Es können Undichtigkeiten ausgeglichen werden, da mittels dieses Überdrucks im Sinterraum kein Sauerstoff und/oder Verunreinigungen eindringen kann. Es herrscht somit eine Druckdifferenz zwischen Umgebung außerhalb des Sinterofens und Sinterraum innerhalb des Sintereinsatzes.

Eine weitere vorteilhafte Verfahrenserweiterung ist die Erzeugung eines Überdrucks durch Einführen des Schutzgases oder der Flüssigkeit in den Sinterraum und/oder Sinterkammer und/oder Schutzraum. Dadurch werden eine oder mehrere kraftschlüssige Verbindungen zwischen den einzelnen Bauteilen oder Komponenten des Sintereinsatzes gelöst. Durch den entstandenen Überdruck wird die Lösung beziehungsweise Trennung mindestens einer kraftschlüssigen, insbesondere konischen, Verbindung herbeigeführt. Somit lässt sich beispielsweise bei kurzzeitiger Erhöhung des Schutzgasdruckes oder der Flüssigkeitsmenge die Abdeckung auch abheben beziehungsweise einfach lösen. Eine weitere beispielhafte Möglichkeit zum Lösen der Verbindung besteht darin, das Gehäuse beziehungsweise Basisteil mit Löchern zu versehen und mittels einer Stange die Abdeckung von dem Basisteil wieder zu lösen. Es kann somit ein Lösen der kraftschlüssigen Verbindungen mittels einer mechanischen Hebelvorrichtung erreicht werden.

Eine weitere beispielhafte Verfahrensvariante stellt der Einsatz eines Distanzringes dar. Der Sintereinsatz wird somit mit einem Distanzring versehen, der zur Lösung einer kraftschlüssigen, vorzugsweise oder insbesondere konischen, Verbindung zwischen einzelnen Bauteilen oder Komponenten des Sintereinsatzes verwendet wird. Insbesondere soll die Verbindung zwischen der ersten Abdeckung und dem Basisteil und/oder zwischen der zweiten Abdeckung und der Sinterschale verwendet werden. Der Distanzring wird beispielsweise zwischen der ersten Abdeckung und dem Basisteil angebracht, so dass dieser einen bestimmten Abstand der beiden Sintereinsatz-Bauteile wahren kann. Dadurch wird das nicht erwünschte beziehungsweise zu weite Absinken der Abdeckung verhindert.

Eine weitere vorteilhafte Möglichkeit besteht darin, dass die zu sinternden Teile/Objekte aus Metall, insbesondere Titan und/oder Titanlegierungen, und/oder aus Keramik ausgeführt werden. Das Bedeutet, dass Teile/Objekte in diesem Sintereinsatz gesintert werden, die Metalle, insbesondere Titan und/oder Titanlegierungen, und/oder Keramik beinhalten.

Des Weiteren wird eine vorteilhafte Verfahrensvariante erreicht, indem Bauteile oder Komponenten des Sintereinsatzes mit unterschiedlichen vorbestimmten Wärmeausdehnungskoeffizienten verwendet werden. Mittels der unterschiedlichen vorbestimmten Wärmeausdehnungskoeffizienten wird bei einer Temperaturerhöhung eine höhere Dichtigkeit zwischen den Bauteilen oder Komponenten des Sintereinsatzes erzielt. Vor dem Sinterprozess sind zwischen den einzelnen Bauteilen oder Komponenten Luftspalte beziehungsweise Undichtigkeiten vorhanden. Da die Bauteile oder Komponenten vorbestimmte Wärmeausdehnungskoeffizienten besitzen, dehnen sich die Bauteile oder Komponenten, während der Erwärmung des Sintereinsatzes im Sinterofen, entsprechend aus. Je höher der Wärmeausdehnungskoeffizient ist, desto größer ist auch die Ausdehnung des Materials beziehungsweise Werkstoffs bei Wärmeeinwirkung. Der zuvor vorherrschende Luftspalt zwischen den Sinter-Bauteilen oder -Komponenten, zum Beispiel zwischen Basisteil und erster Abdeckung, wird somit durch eine Temperaturerhöhung geschlossen. Es ist dabei empfehlenswert beide an den Luftspalt angrenzenden Bauteile aufeinander abzustimmen. Ein Beispiel hierfür wäre das Basisteil mit einem Wärmeausdehnungskoeffizienten 10 und die erste Abdeckung mit einem Wärmeausdehnungskoeffizienten 17 auszubilden beziehungsweise auszuwählen. Bevor sich dann der vorherrschende Luftspalt verschließt, kann hier ebenfalls das Schutzgas entweichen.

Fernerhin ist es zweckmäßig mittels einer oder mehreren an oder in dem/den Kanälen oder Rohren angeordneten Sonden oder Messgeräte Druck und/oder Gasatmosphäre und/oder Menge und/oder Temperatur zu messen/ermitteln. Diese sind elektronisch mit der Ofensteuerung verbunden. Mittels der Messsonden können die gewünschten Messdaten, zum Beispiel Druck oder Gasatmosphäre oder Menge des eingeführten Stoffes, ermittelt werden, um vorzugsweise die Dichtigkeit des Sintereinsatzes zu überprüfen. Beispielsweise weist ein undichter Sintereinsatz im Vergleich zu einem dichten Sintereinsatz einen geringeren Druck auf. Es können ebenfalls auch andere Sonden oder Messgeräte dort angebracht werden, um benötigte Daten oder Datensätze ermitteln zu können. Des Weiteren kann bei verschiedenen Temperaturbereichen die gewünschte Menge des einzuführenden Stoffes elektronisch gesteuert werden. Da dieser von einem Ventil geregelt wird, wird diese Gasmenge noch einmal zur Kontrolle von einem optischen Litermengenmesser (schwebende Kugel) angezeigt. Diese Anzeige wird wiederum noch einmal elektronisch überwacht.

Wie bereits oben beschrieben, wird die Aufgabe neben dem vorgeschlagenen Verfahren auch mit einem erfindungsgemäßen Sintereinsatz gelöst. Der Sintereinsatz ist für einen Sinterofen zum Sintern von Metall und/oder Keramik, insbesondere in der Dentaltechnik, angedacht. Des Weiteren kann der Sintereinsatz zum Beispiel zur Durchführung des obig genannten Verfahrens sowie dessen vorteilhaften Varianten verwendet werden.

Im Rahmen der Erfindung liegt ein Sintereinsatz, aufweisend ein Basisteil auf, das mit einer ersten Abdeckung, beispielsweise einem Deckel, einen Sinterraum bildet. Das bedeutet, dass der erfindungsgemäße Sintereinsatz im Wesentlichen aus drei Teilen, nämlich einem Basisteil, der mit einer ersten Abdeckung einen Sinterraum zur Aufnahme einer Sinterschale bildet. Wie auch bereits schon beschrieben, ist dieser Sinterraum mit einem oder mehreren Kanälen oder Rohren versehen, wodurch eine Verbindung vom Sinterraum zur Umgebung außerhalb des Sinterofens hergestellt ist. Diese Konstruktion ist im Prinzip aus den vorstehend genannten Schriften bekannt.

Das Neue der Erfindung besteht in der Art der Abdichtung des Sinterraumes gegenüber der Atmosphäre im Inneren des Sinterofens. Das Basisteil des Sintereinsatzes gemäß Erfindung weist eine nach innen konisch verlaufende Innenwand oder Außenwand auf. Diese konisch verlaufende Innenwand oder Außenwand kann mit einer entsprechenden Außenwandungsfläche und/oder Innenwandungsfläche der ersten Abdeckung im gesamten Konusbereich in Kontakt treten. Hierdurch ergibt sich eine gegenüber den bekannten Dichtflächen um eine Zehnerpotenz erhöhte Dichtfläche mit entsprechend erhöhtem Wirkungsgrad.

Eine weitere Möglichkeit besteht darin, dass der Sinterraum über ein Rohr mit Schutzgas beflutbar ist, das über ein zweites Rohr abführbar ist. Beide Rohre können auch als eine Anschlussleitung für eine Pumpe, insbesondere einer Vakuumpumpe, dienen.

Bevorzugt ist das Basisteil als ein nach oben offenes Becherteil ausgebildet. Unter Becherteil wird jegliche Geometrie verstanden, bei der eine Platte einen nach oben gezogenen Rand besitzt. Dieser Rand kann eine beliebige Höhe aufweisen.

Ebenfalls stellt eine vorteilhafte Ausführungsvariante die Ausbildung des Basisteils als Bodenplatte dar.

Es ist außerdem zweckmäßig, die Außenwandungsfläche und/oder die Innenwandungsfläche der ersten Abdeckung bezüglich der konischen Basisteil-Innenwandung oder Basisteil-Außenwandung komplementär konisch auszubilden. Somit sind die Außenwandungsflächen und/oder Innenwandungsflächen der ersten Abdeckung und die Innenwandung oder Außenwandung des Basisteils aneinander angepasst beziehungsweise aufeinander abgestimmt. Beim Zusammensetzen dieser Flächen entsteht somit vorzugsweise kein Spalt. Die Längen der Konusflächen können beliebig ausgeführt sein.

Eine weitere vorteilhafte Ausführungsvariante stellt der Sintereinsatz dar, bei dem der waagrechte Teil der ersten Abdeckung nach unten versetzt ist. Dadurch ergibt sich eine bessere mechanische Festigkeit der gesamten Konstruktion, was zusätzlich in einer besseren Abdichtung resultiert. Die "H"-Form der ersten Abdeckung ist jedoch nicht zwingend erforderlich. Eine umgedrehte U-Form kann ebenso als Abdeckung verwendet werden.

Nach einer beispielhaften Ausführung ist in den gebildeten Sinterraum eine Sinterschale eingepasst oder sonst wie angeordnet. Es ist vorteilhaft, die Sinterschale mit einem Wärmeausdehnungskoeffizienten, der kleiner oder größer als der der ersten Abdeckung und/oder des Basisteils ist, auszubilden. Des Weiteren ist es zweckmäßig, dass die Sinterschale einen H-förmigen Querschnitt oder einen U-förmigen Querschnitt aufweist, wobei der U-förmige Querschnitt auf einem oder mehreren Standfüßen steht. Eine beispielhafte Weiterbildung ist ebenso, einen Abstand von 0,1 bis 0,2 mm zwischen der Außenwand der Sinterschale und der Innenwand der ersten Abdeckung auszubilden.

Das bedeutet, dass in dem vom Basisteil und ersten Abdeckung gebildeten Sinterraum eine Sinterschale mit H-förmigem oder U-förmigem Querschnitt zur Aufnahme des Sintergutes eingepasst ist. Unter Einpassen in diesem Zusammenhang wird verstanden, dass zwischen der Seitenwand beziehungsweise Außenwand der Sinterschale und der Innenwand der ersten Abdeckung ein Abstand von 0,1 bis 0,2 mm eingehalten ist. Der so entstehende Spalt wirkt als Diffusionssperre gegen noch vorhandenen Sauerstoff. Diese Konstruktion ist für sich alleine schon so wirksam, dass es unter Umständen der oben erwähnten konischen Abdichtflächen nicht bedarf.

Bei dem U-förmigen Querschnitt kann zum Beispiel ein durchgehender ringartiger Standfuß verwendet werden, um die Kanal- oder Rohröffnungen im Sinterraum nicht zu verschließen. Ein weiteres Beispiel ist die Verwendung von mehreren einzelnen Standfüßen, die ringsum am Innenboden des Basisteils angeordnet sind. Die Geometrie der Standfüße ist beliebig. Sie sollten jedoch für einen gewissen Abstand zwischen Sinterschale und Kanal- oder Rohröffnung sowie auch für die Standfestigkeit der Sinterschale sorgen. Da in der Sinterschale die zu sinternden Teile/Objekte liegen, ist es empfehlenswert die Sinterschale mit einem, im Vergleich zu den anderen Bauteilen oder Komponenten des Sintereinsatzes, kleineren Wärmeausdehnungskoeffizienten auszubilden, so dass sich die Sinterschale nicht beziehungsweise nur sehr gering ausdehnt.

Vorzugsweise wird der Sinterraum mittels der Sinterschale in eine Sinterkammer und in einen Schutzraum unterteilt. Der von der Sinterschale umgebende Raum stellt die Sinterkammer dar, in der sich die zu sinternden Teile/Objekte befinden. Als Schutzraum wird hingegen der Teil des Sinterraums benannt, der sich außerhalb der Sinterschale befindet.

Eine weitere vorteilhafte Ausführung wird dadurch erreicht, dass der Sinterraum und/oder die Sinterkammer mit der ersten Abdeckung und/oder einer zweiten Abdeckung, beispielsweise einem Sinterschalendeckel, verschlossen ist. Diese zweite Abdeckung kann entweder ein eigenständiges Bauteil darstellen oder in der ersten Abdeckung integriert sein. Mit dieser Integration würde die erste Abdeckung mehrere Deckelfunktionen übernehmen. Die erste Abdeckung verschließt immer den Sinterraum. Die zweite Abdeckung hingegen verschließt beispielsweise nur die Sinterkammer. Das dadurch entstehende Zweikammersystem bietet eine weitere Sicherheit sauerstofffreie Sinterung zu garantieren, die vor allem bei medizinischen Anwendungen von größter Bedeutung ist. Die Abdeckungen können zum Abheben noch mit einem Handgriff versehen werden.

Bei Verwendung einer zweiten Abdeckung ist es zweckmäßig, dass die Innenwand und/oder Außenwand der Sinterschale eine Konusform aufweist, so dass diese mit einer entsprechenden Außenwandungsfläche und/oder Innenwandungsfläche der zweiten Abdeckung im gesamten und/oder in einem Teil des Konusbereichs in Kontakt treten kann. Wie auch bereits schon bei dem Basisteil und der ersten Abdeckung beschrieben, ergibt sich hierdurch ebenfalls eine gegenüber den bekannten Dichtflächen um eine Zehnerpotenz erhöhte Dichtfläche mit entsprechend erhöhtem Wirkungsgrad.

Es ist ebenfalls zweckmäßig, dass die entsprechende Außenwandungsfläche und/oder Innenwandungsfläche der zweiten Abdeckung bezüglich der konischen Sinterschalen-Innenwandung und/oder Sinterschalen-Außenwandung komplementär konisch ausgebildet ist. Dadurch sollte vorzugsweise nach dem Zusammensetzen der dazugehörigen Bauteile oder Komponenten kein Spalt entstehen. Des Weiteren sind die Außenwandungsflächen und/oder Innenwandungsflächen der zweiten Abdeckung und die Innenwandung und/oder Außenwandung der Sinterschale passgenau aufeinander abgestimmt beziehungsweise aneinander angepasst. Die Längen der Konusflächen können beliebig ausgeführt sein.

Eine weitere beispielhafte Ausführungsform des Sintereinsatzes ist, dass der Konuswinkel des Basisteils und der ersten Abdeckung und/oder der Konuswinkel der Sinterschale und der zweiten Abdeckung einen Winkel von 1° bis 5° oder von 1° bis 45°, bevorzugt 2° aufweist. Das bedeutet, dass der Konuswinkel oder die Konenwinkel gegenüber der Senkrechten oder den Senkrechten 1° bis 5° oder 1° bis 45°, bevorzugt 2° betragen.

Vorteilhaft ist es weiterhin den Sintereinsatz so auszuführen, dass der Sinterraum oder die Sinterkammer oder der Schutzraum mit einer oder mehreren Pumpen zur Erzeugung von Vakuum und/oder zur Flutung mit Schutzgas verbunden ist. Dadurch kann der Sinterprozess während einer Vakuum- und/oder Schutzgasatmosphäre stattfinden. Beide Atmosphären im Sintereinsatz können nur gleichzeitig verwirklicht werden, wenn der Sintereinsatz ein Zweikammersystem beinhaltet. Das bedeutet, dass die Sinterkammer und der Schutzraum getrennt voneinander mit Abdeckungen verschlossen werden können. Somit kann eine Schutzgasatmosphäre in dem Schutzraum und eine Vakuumatmosphäre bzw. eine annähernde Vakuumatmosphäre in der Sinterkammer erreicht werden. Ebenfalls ist es denkbar, Schutzgas in die Sinterkammer ein- und auszuführen und im Schutzraum mittels einer Pumpe, bevorzugt einer Vakuumpumpe, eine Vakuumatmosphäre zu schaffen.

Des Weiteren ist es zweckmäßig gemäß der Erfindung, dass jedes Bauteil oder jede Komponente einen derart vorbestimmten Wärmeausdehnungskoeffizienten aufweist, und die jeweiligen Wärmeausdehnungskoeffizienten in Relation zueinander so dimensioniert sind, dass bei Temperaturerhöhung sich eine erhöhte Dichtigkeit aneinander stoßender Kontaktflächen der Bauteile oder Komponenten ergibt. Insbesondere sind dabei das Basisteil und/oder erste Abdeckung und/oder Sinterschale und/oder zweite Abdeckung betroffen. Wie bereits beschrieben, dehnen sich bei Temperatur- beziehungsweise Wärmeeinwirkung die Bauteile oder Komponenten aus. Je höher der Wert des Wärmeausdehnungskoeffizienten desto größer auch die Ausdehnung. Empfehlenswert ist es, die Abdeckungen mit einem höheren Wärmeausdehnungskoeffizienten auszubilden, damit sich diese ausdehnen bis sie an den gegenüberliegenden Kontaktflächen anstoßen, da eine Ausdehnung der anderen Bauteile oder Komponenten eventuell Nachteile mit sich bringen kann.

Es besteht ebenfalls die vorteilhafte Möglichkeit in einem oder mehreren Durchgängen, welche die erste oder zweite Abdeckung durchsetzen, wenigstens ein Rückschlagventil anzuordnen. Bevor der Sintereinsatz im Sinterofen erwärmt/erhitzt wird, wird das Sintergut beziehungsweise die zu sinternden Teile/Objekte in die Sinterschale gelegt. Um Verunreinigungen aus der Sinterkammer abzutransportieren, wird in diese Sinterkammer Schutzgas eingeleitet. Das eingeleitete Schutzgas sowie die Verunreinigungen können dann durch das Rückschlagventil abgeführt werden. Das Rückschlagventil, beispielsweise als Bolzen oder Kugel ausgeführt, verhindert den Rückfluss der Verunreinigungen in die Sinterkammer, so dass nur noch eine Schutzgasatmosphäre in der Sinterkammer vorherrscht.

Der Sintereinsatz kann beispielsweise aus Rohrabschnitten und flachen Scheiben zusammengeschweißt sein. Des Weiteren ist es zweckmäßig, dass der jeweils verwendete Werkstoff der Systemkomponenten eine ferritische FeCrAl-Legierung (Kanthal-Legierung) und/oder NiCr25FeAly (HAT 6025 Krupp) und/oder Aluminiumoxid und/oder Zirkonoxid und/oder rekristallisiertes Siliziumkarbid und/oder Macor und/oder Aluminiumnitrad Shapal-M mit aufweist.

In den vorstehend genannten Schriften wird als Material für einen Sintereinsatz eine Reihe von Werkstoffen genannt, darunter ist in der DE 20 2011 106 734.7 ein aluminiumhaltiger ferritischer Chromstahl angeführt. Dieser Werkstoff hat sich als besonders geeignet erwiesen und ist unter der Bezeichnung Kanthal^{®} unter anderem in Platten- und Rohrform erhältlich. Es ist daher vorteilhaft, den erfinderischen Sintereinsatz nur aus Scheiben und Rohrabschnitten zusammenzuschweißen, was die noch notwendige spanabhebende Arbeit minimiert. Dies ist insbesondere auch im Hinblick auf die relativ hohen Materialkosten zu empfehlen.

Eine weitere vorteilhafte Ausführung stellt der Sintereinsatz mit einem oder mehreren Distanzringen dar. Der Distanzring liegt auf einem Innenboden des Basisteils und/oder der Sinterschale auf. Des Weiteren weist dieser einen in Relation zu anderen Sintereinsatz-Bauteilen oder -Komponenten spezifisch vorbestimmten Wärmeausdehnungskoeffizienten auf. Der Distanzring soll ein zu weites Absinken der Abdeckung oder der Abdeckungen verhindern. Da die Distanzringe nur in das Basisteil und/oder in die Sinterschale eingelegt werden, sind die Höhen der eingesetzten Distanzringe leicht zu ändern.

Während des Betriebes des Sinterofens wird der Sintereinsatz sowie das Sintergut, das sich in der Sinterkammer befindet, erhitzt. Durch die Temperaturerhöhung und den unterschiedlichen Wärmeausdehnungskoeffizienten der einzelnen Sintereinsatzkomponenten wird die Dichtigkeit an den Konusflächen erhöht. Die Abdeckung dehnt sich aufgrund seines hohen Wärmeausdehnungskoeffizienten aus, so dass die Mantelfläche, die so genannte konische Außenwand und/oder Innenwand der Abdeckung, den Sinterraum mit der Konusfläche des Basisteils luftdicht verschließt. Nach erfolgreichem Sintern des Sinterguts wird der Sintereinsatz aus dem Sinterofen herausgenommen. Dadurch entsteht eine ungleichmäßige Abkühlung der Sintereinsatzkomponenten des Sintereinsatzes. Das Basisteil erfährt eine schnellere Abkühlung als die in dem Basisteil liegenden Sintereinsatzkomponenten, insbesondere der Abdeckung, wodurch ein Abrutschen der Abdeckung hervorgeht. Der im Basisteil unten liegende Distanzring verhindert das Abrutschen der Abdeckung während der Abkühlphase.

Ebenfalls ist es zweckmäßig, dass mit der Anordnung des Distanzrings ein Endgasungsspalt entsteht, der sich bei höheren Temperaturen aufgrund des Wärmeausdehnungskoeffizienten des Distanzrings gasdicht verschließt.

Des Weiteren ist eine weitere Ausführung der Erfindung, dass ein oder mehrere Kanäle oder Rohre mit jeweils einem Edelstahlwellrohr verbunden sind. Das Schutzgas, bevorzugt Argon, wird über ein Kanal oder Rohr zugeführt und über den gleichen Kanal oder Rohr oder einem weiteren Kanal oder Rohr abgeführt oder abgesaugt. Obwohl der/die Kanäle oder Rohre aus dem Sinterofen herausragen, ist die Temperatur am Kanal- oder Rohrende außerhalb des Sinterofens noch beachtlich hoch. Es ist daher empfehlenswert, das Schutzgas über ein Edelstahlwellrohr in den Kanal oder in das Rohr einzuleiten. Ebenfalls kann ein solches Edelstahlwellrohr auch an den Absaug- bzw. Auslasskanal oder - rohr angebracht sein.

Eine vorteilhafte Ausführungsform des erfindungsgemäßen Sintereinsatzes besteht darin, an und/oder in dem/den Kanälen oder Rohren eine oder mehrere Sonden oder Messgeräte zur Ermittlung von Druck und/oder Gasatmosphäre anzuordnen. Vorzugsweise sollten Sonden oder Messgeräte an dem Auslasskanal oder -rohr angeordnet sein.

Die Abdichtung gegenüber dem atmosphärischen Sauerstoff ist bei dem erfindungsgemäßen Sintereinsatz so wirkungsvoll, dass die zugeführte Menge an Argon bei 0,1 l/min oder weniger liegt.

Die in den Sintereinsatz eingebauten Ventile sind entweder handbetätigte, elektromagnetische, elektrische, pneumatische oder hydraulische Ventile. Die Gasdurchgangsmenge ist mit einer elektrischen Ofensteuerung hinsichtlich Zeit und/oder Temperatur und/oder Gasart frei programmierbar.

Neben dem erfindungsgemäßen Verfahren und dem erfindungsgemäßen Sintereinsatz, liegt im Rahmen der Erfindung Verwendung eines Sintereinsatzes in einem Sinterofen zur Sinterung von Metall und/oder Keramik, wobei der Sintereinsatz die Komponenten Basisteil, Abdeckung und einen dadurch gebildeten Sinterraum aufweist, vorgeschlagen. Hierfür werden folgende Schritte durchgeführt bzw. gibt es folgende Möglichkeiten:
Die erste Möglichkeit besteht darin, abwechselnd Schutzgas in den Sinterraum einzuführen und Schutzgas mit etwaigen Verunreinigungen, beispielsweise Sauerstoff, aus dem Sinterraum abzusaugen. Es wird somit erst Schutzgas eingeführt und anschließend abgesaugt. Für diese Möglichkeit würde ein Kanal oder Rohr ausreichen, da das Einführen von Schutzgas und Absaugen von Schutzgas mit Verunreinigungen nacheinander oder abwechselnd erfolgt.

Die zweite Möglichkeit besteht darin, anstatt abwechselnd zeitgleich Schutzgas in den Sinterraum einzuführen und Schutzgas mit etwaigen Verunreinigungen, beispielsweise Sauerstoff, aus dem Sinterraum abzusaugen. Um diese zweite Möglichkeit, zur selben Zeit oder simultan beziehungsweise gleichzeitig das Schutzgas in den Sinterraum einzuführen und abzuführen oder abzusaugen, nutzen zu können, werden mindestens zwei Kanäle oder Rohre benötigt.

Eine weitere bzw. dritte Möglichkeit besteht darin, beide vorigen Möglichkeiten, d.h. abwechselndes beziehungsweise nacheinander folgendes und zeitgleiches Einführen von Sauerstoff und Absaugen von Sauerstoff und den im Sinterraum vorherrschenden Verunreinigungen, aufeinander folgend oder abwechselnd durchzuführen. Das bedeutet, dass eine Kombination oder eine Abfolge der ersten und zweiten Möglichkeit statt finden kann, um ebenfalls eine sauerstofffreie beziehungsweise näherungsweise sauerstofffreie Sinteratmosphäre im Sinterraum eines Sintereinsatzes zu erzeugen. Hierfür werden, wie bereits auch bei der zweiten Möglichkeit beschrieben, mindestens zwei Kanäle oder Rohre benötigt.

Die vierte Möglichkeit besteht darin, eine Flüssigkeit in einen Teil des Sinterraums einzuführen und mittels der Verbindung abzusaugen oder abzuführen. Dabei kann eine Kühlflüssigkeit, insbesondere Öl oder Wasser, verwendet werden, um den Sintereinsatz abzukühlen. Dies ist vergleichsweise mit der Abkühlung an der Luft viel schneller, wodurch sich zum einen die Zykluszeit vom zu sinternden Teil/Objekt bis hin zum fertig gesinterten und abgekühlten Teil/Objekt verkürzt und zum anderen eine Erhöhung/Verbesserung der Qualität herbeiführt. Hierfür können alle bekannten Flüssigkeiten oder Gemische der einzelnen Flüssigkeiten verwendet werden. Hierfür ist es zweckmäßig eine getrennte Kühlkammer oder einen Kühlkreislauf in den Sintereinsatz anzuordnen. Eine weitere beispielhafte Ausführung wäre die Verwendung eines Zweikammersystems. Das bedeutet, dass der Sinterraum in Sinterkammer und Schutzraum geteilt ist und die Sinterkammer selbst mittels einer Abdeckung verschlossen ist und somit die zu sinternden Objekte/Teile vor der Flüssigkeit schützt. Des Weiteren kann das Spülen mit der Flüssigkeit verwendet werden, um Verunreinigungen vor oder nach oder während des Sintervorgangs aus dem Sinterraum herauszutransportieren.

Bei der Verwendung eines Sintereinsatzes in einem Sinterofen, wobei die Komponenten Basisteil, Abdeckung und einen dadurch gebildeten Sinterraum aufweist, zur Sinterung von Metall und/oder Keramik, insbesondere zu dentaltechnischen Zwecken, werden die folgenden Schritte durchgeführt: abwechselnd wird Schutzgas in den Sinterraum eingeführt und Schutzgas mit etwaigen Verunreinigungen, beispielsweise Sauerstoff, aus dem Sinterraum abgesaugt, oder zeitgleich wird Schutzgas in den Sinterraum eingeführt und Schutzgas mit etwaigen Verunreinigungen, beispielsweise Sauerstoff, aus dem Sinterraum abgesaugt, oder die vorig genannten Schritte werden aufeinander folgend oder abwechselnd durchgeführt, oder eine Flüssigkeit wird in den Sinterraum eingeführt und mittels der Verbindung abgesaugt.

Weitere Einzelheiten, Merkmale, Merkmalskombinationen und Wirkungen auf der Basis der Erfindung ergeben sich aus der nachfolgenden Beschreibung bevorzugter, beispielhafter Ausführungsformen der Erfindung sowie aus den Zeichnungen. Diese zeigen in:
- Figur 1: ein Ausführungsbeispiel eines erfindungsgemäßen Sintereinsatzes im vertikalen Querschnitt mit zwei nach unten verlaufenden Kanälen oder Rohren
- Figur 2: ein weiteres Ausführungsbeispiel eines erfindungsgemäßen Sintereinsatzes im vertikalen Querschnitt gemäß Fig. 1 unter Verwendung eines Basisteils mit ringförmiger Vertiefung
- Figur 3: ein weiteres Ausführungsbeispiel eines erfindungsgemäßen Sintereinsatzes im vertikalen Querschnitt gemäß Fig. 2 mit einem nach unten verlaufenden Kanal oder Rohr
- Figur 4: ein Ausführungsbeispiel eines erfindungsgemäßen Sintereinsatzes im vertikalen Querschnitt mit einem nach unten verlaufenden Kanal oder Rohr
- Figur 5: ein weiteres Ausführungsbeispiel eines erfindungsgemäßen Sintereinsatzes im vertikalen Querschnitt gemäß Fig 3
- Figur 6: ein Ausführungsbeispiel eines erfindungsgemäßen Sintereinsatzes im vertikalen Querschnitt unter Verwendung einer ersten Abdeckung mit integrierter zweiten Abdeckung
- Figur 7: ein weiteres Ausführungsbeispiel eines erfindungsgemäßen Sintereinsatzes im vertikalen Querschnitt gemäß Fig. 5, bei dem die Kanäle oder Rohre nach unten aus dem Sinterofen herausragen
- Figur 8: ein weiteres Ausführungsbeispiel eines erfindungsgemäßen Sintereinsatzes im vertikalen Querschnitt gemäß Fig. 5 mit einer getrennten eigenständigen zweiten Abdeckung und nach unten herausragenden Kanälen oder Rohren
- Figur 9: ein weiteres Ausführungsbeispiel eines erfindungsgemäßen Sintereinsatzes im vertikalen Querschnitt gemäß Fig. 5 unter Verwendung eines Bolzen-Rückschlagventils
- Figur 10: ein weiteres Ausführungsbeispiel eines erfindungsgemäßen Sintereinsatzes im vertikalen Querschnitt gemäß Fig. 5 unter Verwendung eines Kugel-Rückschlagventils

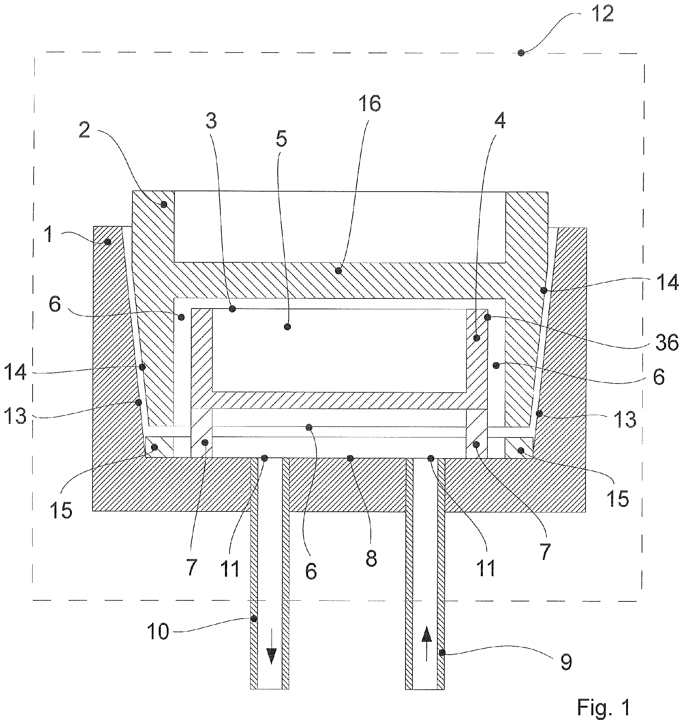

Die gestrichelte Linie in Fig. 1 bis Fig. 10 umreißt den Bereich eines beliebigen handelsüblichen Sinterofens **12**, wie er in der Dentaltechnik eingesetzt wird. Hieraus ist ersichtlich, dass an den üblichen Sinteröfen keine großen Änderungen vorgenommen werden müssen, um den erfindungsgemäßen Sintereinsatz verwenden zu können. Des Weiteren sind zum besseren Verständnis die Abstände bzw. Spalte zwischen den Sintereinsatzkomponenten sowie die Konuswinkel übertrieben dargestellt.

Gemäß Fig. 1 besteht der erfindungsgemäße Sintereinsatz im Wesentlichen aus drei Teilen, nämlich einem Basisteil **1**, der mit einer ersten Abdeckung **2**, beispielsweise einem Deckel, einen Sinterraum **3** zur Aufnahme einer Sinterschale **4** bildet. Das Basisteil **1** ist in Fig. 1 als ein Becherteil ausgebildet. Die Sinterschale **4** teilt den Sinterraum **3** in eine Sinterkammer **5**, die sich innerhalb der Sinterschale **4** befindet, und in einen Schutzraum **6**, der axial unterhalb und seitlich (radial) der Sinterschale **4** angeordnet ist, auf. In der Sinterschale **4** bzw. in der so genannten Sinterkammer **5** befindet sich das oder die zu sinternden Objekte. Die Sinterschale **4** wird von zwei Standfüßen **7** getragen, die auf dem Innenboden **8** des Basisteils **1** in einem radialen Abstand zueinander liegen. In den Sinterraum **3** beziehungsweise in den Schutzraum **6** führen zwei Kanäle oder Rohre **9**, **10.** Die sich im Inneren des Sintereinsatzes befindenden Stirnöffnungen **11** der zwei Kanäle oder Rohre **9**, **10** münden radial innerhalb der zwei Standfüße **7** am Innenboden **8** des Basisteils **1.** Beide Kanäle oder Rohre **9**, **10** verlaufen vertikal/senkrecht bzw. in Axialrichtung des Basisteils **1** nach unten und ragen aus dem Sinterofen **12** heraus.

Der Sinterraum **3** und somit die Sinterkammer **5** und der Schutzraum **6** werden über den Einlasskanal oder -rohr **9** mit Schutzgas beflutet, das über den Auslasskanal oder -rohr **10** abgeführt wird. Bevor eine ausreichende Wärmeeinbringung hinsichtlich der Wärmeausdehnungskoeffizienten der Bauteile oder Komponenten erfolgt ist, kann das Schutzgas ebenfalls durch den Spalt zwischen Konusfläche Basisteil **1** und Konusfläche erster Abdeckung **2** entweichen. Erst ab einer bestimmten Temperatur, die abhängig von den Wärmeausdehnungskoeffizienten der einzelnen Bauteile ist, wird der Luftspalt aufgrund der Bauteilausdehnung geschlossen, so dass der Sinterraum **3** abgedichtet ist.

Das Basisteil **1** weist eine nach innen konisch verlaufende Innenwand **13** auf, die so genannte Konusfläche, die mit einer entsprechenden Konusfläche an der Außenwandung **14** der ersten Abdeckung **2** im gesamten Konusbereich in Kontakt treten kann. Axial unterhalb der ersten Abdeckung **2** befindend und auf dem Innenboden **8** des Basisteils **1** liegend, ist ein Distanzring **15** angeordnet. Der Distanzring **15** weist eine bestimmte Höhe auf, so dass dieser ein zu weites Absinken der ersten Abdeckung **2** verhindert aber auch die Konusflächen am sauerstoffdichten Einschließen des Sinterraums **3** nicht behindert. Der Außendurchmesser des Distanzrings **15** entspricht dem kleinsten Innendurchmesser des Basisteils **1** und der Innendurchmesser des Distanzrings **15** ist an den Innendurchmesser der ersten Abdeckung **2** angepasst.

Wie ebenfalls aus der Fig. 1 ersichtlich, ist der waagrechte Teil **16** der ersten Abdeckung **2** nach unten versetzt. Dadurch ergibt sich eine bessere mechanische Festigkeit der gesamten Konstruktion, was zusätzlich in einer besseren Abdichtung resultiert. In dieser Ausführung kann Schutzgas oder Flüssigkeit ein- und ausgeführt werden.

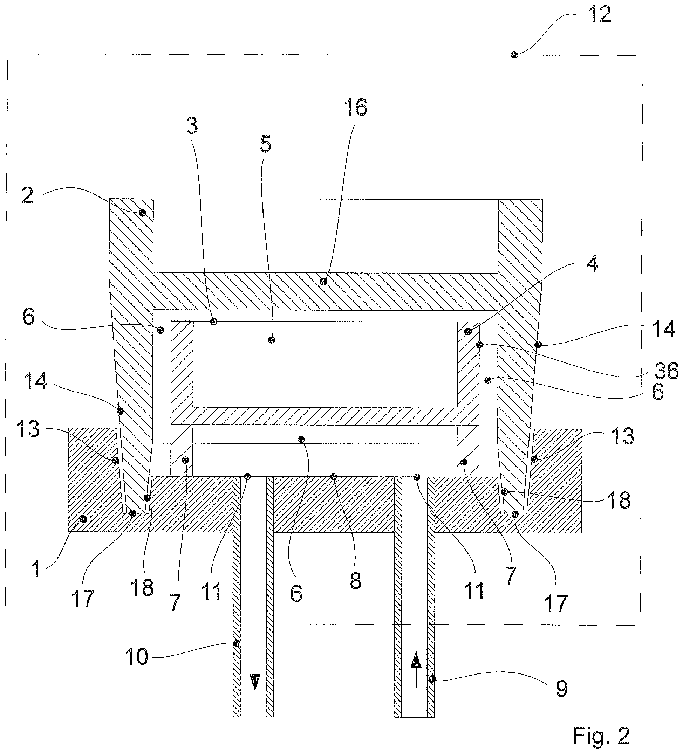

In der Fig. 2 ist ein weiteres Ausführungsbeispiel für einen Sintereinsatz zum sauerstofffreien Sintern dargestellt. Der Unterschied zu Fig. 1 liegt darin, dass das Basisteil **1** nur einen geringen hochgezogenen Rand besitzt. Des Weiteren ist radial nach innen eine Vertiefung **17** im Basisteil **1** vorgesehen. Diese Vertiefung **17** ist geringfügig breiter als die Wand der ersten Abdeckung **2**, deren Außen- **14** und Innenwandungsfläche **18** konisch gegeneinander verlaufen, wodurch sich die Wand nach unten hin verjüngt. Das Basisteil **1** weist demnach in der Vertiefung **17** auf beiden Seiten, wobei die eine Seite eine Verlängerung der Innenwand **13** darstellt, eine entsprechend komplementär ausgebildete Konusfläche auf. Ebenfalls kann hier Schutzgas oder Flüssigkeit ein- und ausgeführt werden.

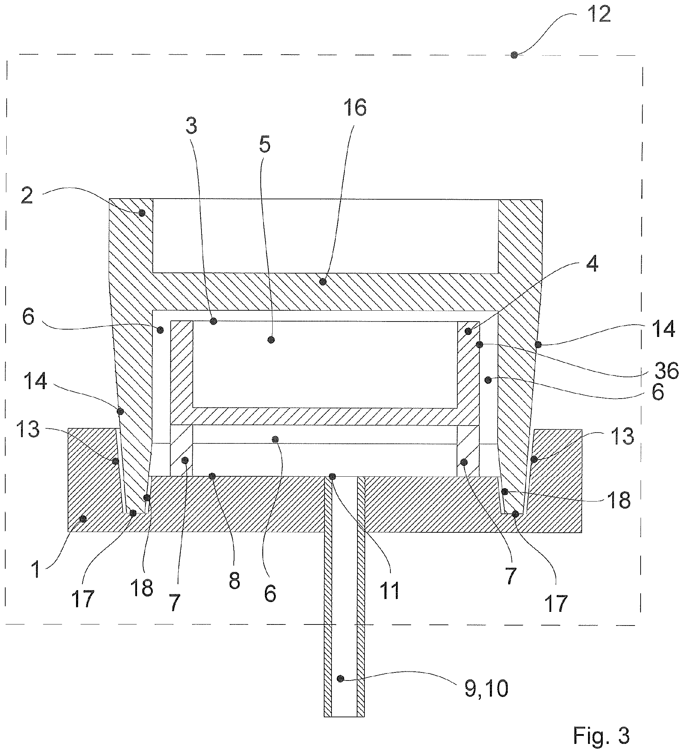

Die Fig. 3 ist an dem Aufbau des dargestellten Ausführungsbeispiels gemäß Fig. 2 angelehnt. Der Unterschied liegt darin, dass nur ein Kanal oder Rohr vorhanden ist, mittels diesem Schutzgas ein- und/oder abgeführt werden kann. Das Einführen und das Ausführen erfolgt demnach zeitversetzt.

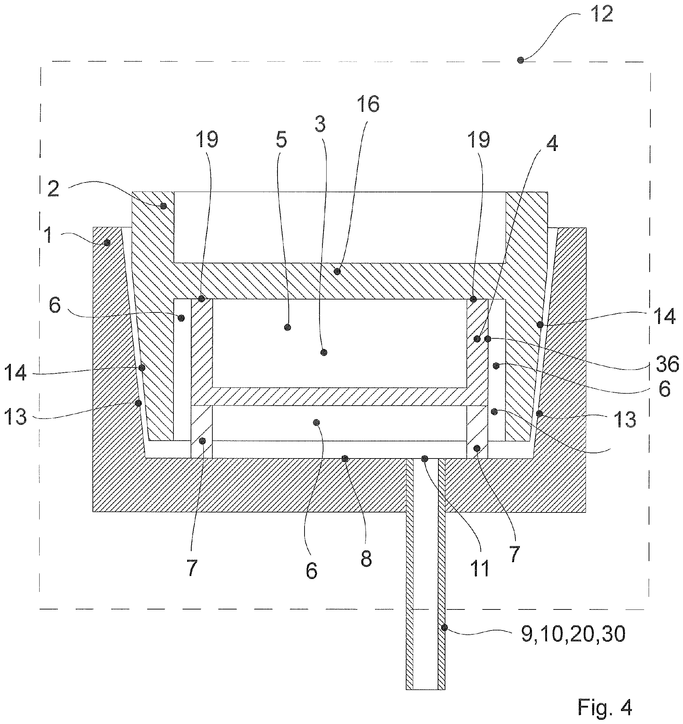

In der Fig. 4 ist ein weiteres Ausführungsbeispiel eines Sintereinsatzes aufgezeigt. Dieser Sintereinsatz umfasst ebenfalls ein Basisteil 1, das mit einer ersten Abdeckung **2** einen Sinterraum **3** einschließt. Wie bereits bei Fig. 1 erwähnt, wird der Sinterraum **3** mittels der Sinterschale **4** in eine Sinterkammer **5**, in der sich die zu sinternden Objekte befinden, und in einen Schutzraum **6**, der die Sinterschale **4** umgibt, unterteilt. Die erste Abdeckung **2** liegt auf der Sinterschale **4** auf und dient als Träger für die erste Abdeckung **2.** Die Auflagefläche **19** weist Unebenheiten auf, wodurch Sauerstoff und/oder Schutzgas von der Sinterkammer **5** in den Schutzraum **6** oder umgekehrt strömen kann. Die Sinterschale **4** hingegen wird, wie auch bereits bei der Fig. 1 ersichtlich, von zwei Standfüßen **7**, die auf dem Innenboden **8** des Basisteils **1** aufliegen, getragen, deren radialer Außenumfang bündig mit der Sinterschale **4** ist.

Gemäß Fig. 4 ist nur ein Kanal oder Rohr **9/10/20/30** beginnend im Basisteil **1** vorhanden. Die sich im Inneren des Sintereinsatzes befindende Stirnöffnung **11** des Kanals oder Rohres **9/10/20/30** mündet radial innerhalb der zwei Standfüße **7** bündig zum Innenboden **8** des Basisteils **1** und führt vertikal/senkrecht nach unten aus dem Sinterraum **3** sowie aus dem Sinterofen **12** heraus. Dieser Kanal oder dieses Rohr **30** kann als Einlass **9** von Schutzgas oder als Auslass **10** dienen. An diesem Auslasskanal oder -rohr **10** kann ebenso eine Vakuumpumpe angeschlossen werden, die das Schutzgas sowie übrig gebliebene Verunreinigungen absaugt. Der Auslass kann somit auch als Pumpenanschlussleitung **20** benannt werden.

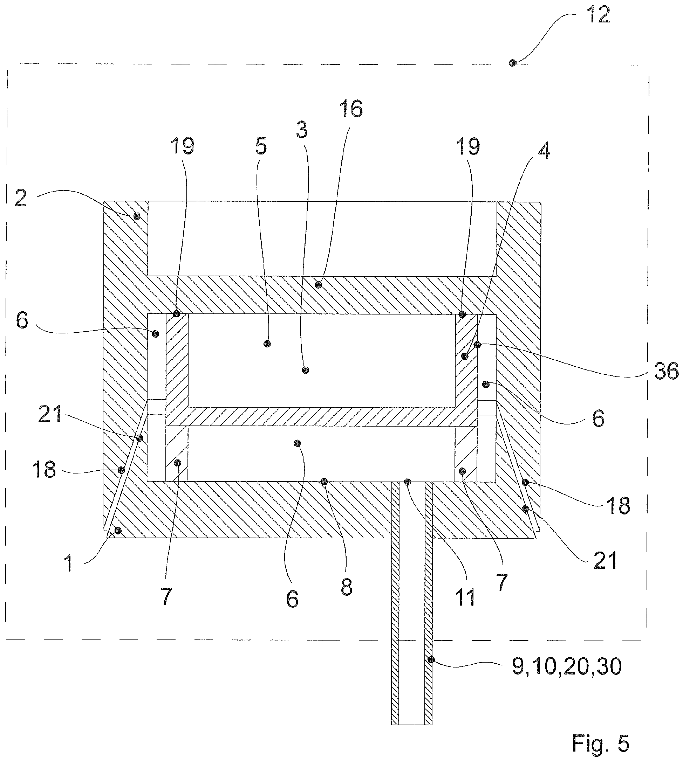

Die Fig. 5 stellt eine weitere beispielhafte Ausführungsform dar. Das Basisteil **1** sowie die erste Abdeckung **2** sind im Vergleich zu Fig. 4 unterschiedlich ausgeführt. Dementsprechend weist die Außenwand **21** des Basisteils **1** eine Konusfläche auf. Die konisch nach oben und innen verlaufende Außenwand **21** stellt den Rand des Basisteils **1** dar. Die erste Abdeckung **2** weist eine dazu komplementär konische Innenwandung **18** auf.

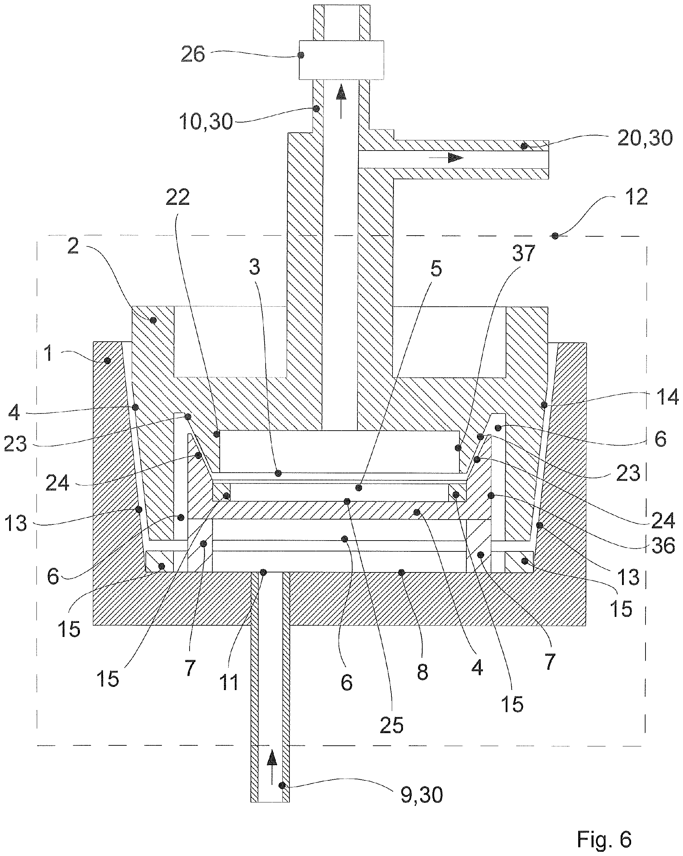

In der Fig. 6 ist ein weiteres Ausführungsbeispiel eines Sintereinsatzes im vertikalen Querschnitt dargestellt. Der Sintereinsatz beinhaltet ein Basisteil **1**, eine erste Abdeckung **2** und einen dadurch eingeschlossenen Sinterraum **3.** In diesen Sinterraum **3** ist, wie auch bereits bei allen vorigen beispielhaften Ausführungsformen, eine Sinterschale **4** eingepasst. Mittels der Sinterschale **4** ist der Sinterraum **3** in eine Sinterkammer **5**, Raum innerhalb der Sinterschale **4**, und einen Schutzraum **6**, Raum außerhalb der Sinterschale **4**, unterteilt. Die Sinterschale **4** ist auf zwei Standfüßen **7** aufgebracht, zwischen denen die Stirnöffnung **11** des Einlasskanals oder -rohres **9** bündig mit dem Innenboden **8** des Basisteils **1** mündet. Ebenfalls ist die Anordnung des Distanzrings **15** zwischen erster Abdeckung **2** und Basisteil **1** sowie deren Konusflächen **13**, **14** entsprechend der Anordnung in Fig. 1.

Die erste Abdeckung **2** weist gemäß Fig. 6 jedoch eine zweite Abdeckungsfunktion auf, die in der ersten Abdeckung **2** integriert ist. Die integrierte zweite Abdeckung **22** verschließt die Sinterschale **4** mittels einer konisch nach unten verjüngenden Außenwandung **23.** Die Sinterschale **4** weist bezüglich der Außenwandung **23** der zweiten Abdeckung **22** eine komplementär konisch ausgebildete Innenwand **24** auf. Auf dem Sinterschaleninnenboden **25** ist wie auch auf dem Innenboden **8** des Basisteils **1** ein Distanzring **15** angeordnet, der das Abrutschen vor allem der zweiten Abdeckung **22** verhindern soll. Des Weiteren weist die Abdeckung **2**, **22** ein Auslasskanal oder -rohr **10** auf, das zentriert/mittig in der Abdeckung **2**, **22** angeordnet ist und von Sinterkammer **5** bis zur Umgebung außerhalb des Sinterofens **12** verläuft. Der Auslass **10** weist am Ende ein Ventil **26** auf, das mechanisch oder elektrisch bedient werden kann. Außerhalb des Sinterofens **12** besitzt der Auslass **10** vor dem Ventil **26** eine Abzweigung oder eine Pumpenanschlussleitung **20**, die horizontal nach rechts verläuft. So kann bevor der Sintereinsatz erwärmt wird und die Bauteile sich entsprechend ausdehnen, Schutzgas am Einlasskanal oder -rohr **9** eingeführt werden, das sich im Schutzraum **6** und in der Sinterkammer **5** verteilt und anschließend über den Spalt zwischen Innenwand **13** des Basisteils **1** und Außenwandung **14** der ersten Abdeckung **2** oder über den Auslass **10** bei offenem Ventil **26** ausströmt. Es kann auch Flüssigkeit anstatt oder nach dem Einführen von Schutzgas eingeführt werden.

Falls der Spalt nach der Wärmeeinbringung zwischen Außenwandung **23** der zweiten Abdeckung **22** und Innenwand **24** der Sinterschale **4** nicht komplett sauerstoffdicht sein sollte, strömt das Schutzgas zwischen diesen Spalt in die Sinterkammer **5.** Von dort aus strömt das Schutzgas weiter durch den Auslasskanal oder -rohr **10** durch das offene Ventil **26** heraus. Falls jedoch die Sinterkammer **5** sauerstoffdicht sein sollte, d.h. dass kein Spalt mehr vorhanden ist, dann wird das Ventil **26** geschlossen und mittels einer Pumpe, insbesondere einer Vakuumpumpe, die an der Pumpenanschlussleitung **20** angebracht ist, das Schutzgas und eventuelle Verunreinigungen abgesaugt.

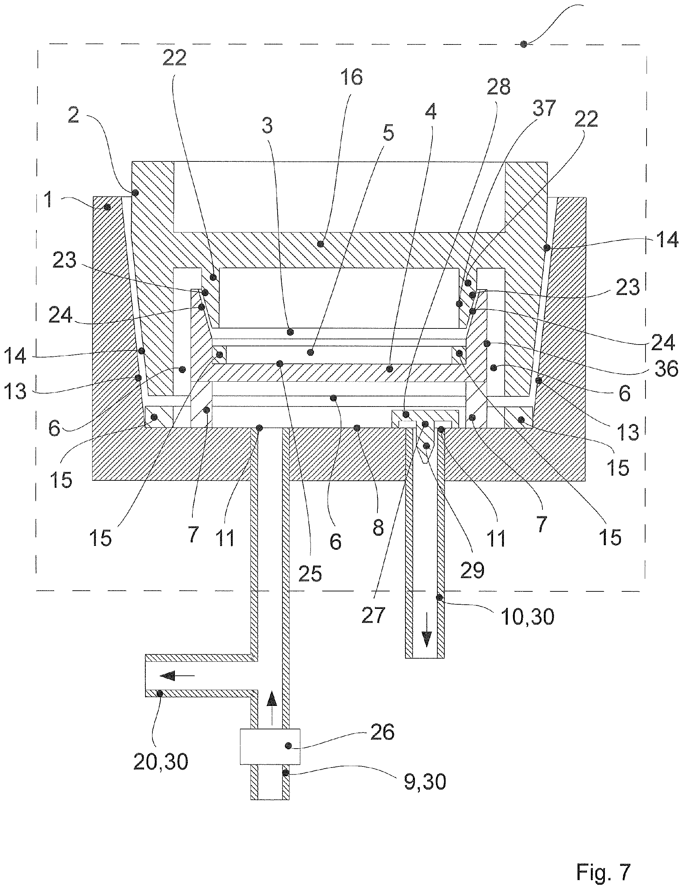

In der Fig. 7 umfasst die erste Abdeckung **2** ebenfalls eine integrierte zweite Abdeckung **22**, die die Sinterkammer **5** einschließt. Im Vergleich zu Fig. 6 besitzt die Abdeckung **2**, **22** kein Auslasskanal oder -rohr. Der Einlass **9** sowie der Auslass **10** sind am Innenboden **8** des Basisteils **1** angeordnet und ragen nach unten vertikal aus dem Sinterofen **12** heraus. Der Einlass **9** weist am Ende außerhalb des Sinterofens **12** ein Ventil **26** sowie eine vorgeordnete horizontale Abzweigung oder Pumpenanschlussleitung **20** auf. In der Stirnöffnung **11** des Auslasskanals oder -rohrs **10** steckt ein Bolzen **27** oder ein kurzes zylindrisches Verbindungselement. Der Bolzenkopf **28** ist als ein Bügel ausgebildet, so dass Luft beziehungsweise Schutzgas problemlos hindurch strömen können. Erst bei Wärmeeinbringung dehnt sich der Bolzen **27** aus, so dass der Bolzenkörper **29** den Auslass **10** verschließt. Wenn der Auslass **10** verschlossen ist, wird das Ventil **26** ebenfalls geschlossen und somit kein weiteres Schutzgas eingeführt, sondern dieses mittels einer Pumpe über die Pumpenanschlussleitung **20** abgepumpt. Beispielsweise kann auch hier Flüssigkeit ein- und ausgeführt werden.

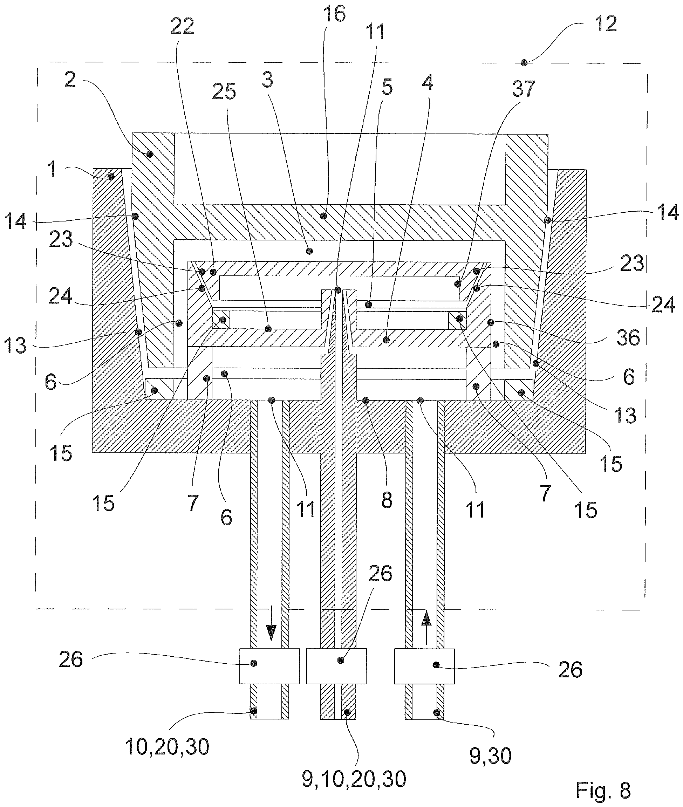

Der dargestellte Aufbau eines Sintereinsatzes in der Fig. 8 weist nur wenige Unterschiede bezüglich Fig. 7 auf. Zum einen stellen die erste Abdeckung **2** und die zweite Abdeckung **22** einzelne Bauteile dar. Des Weiteren sind am Innenboden **8** des Basisteils **1** Einlasskanal oder -rohr **9** sowie Auslasskanal oder -rohr **10**, eventuell ausgeführt als Pumpenanschlussleitung **20**, vertikal/senkrecht nach unten angeordnet. Beide Kanäle oder Rohre weisen ein Ventil **26** auf, das mechanisch oder elektrisch bedient werden kann. Ein weiterer Kanal oder Rohr **30** ist mittig zentriert bezüglich des Basisteils **1** angeordnet und ragt ebenfalls vertikal/senkrecht nach unten aus dem Sinterofen **12** heraus, wobei die Stirnöffnung **11** im Sinterraum **3** in der Sinterkammer **5** mündet. Dieser Kanal oder Rohr **30** kann als Einlass- **9** oder als Auslass **10** oder als Pumpenanschlussleitung **20** verwendet werden. Wie bereits auch bei den anderen zwei Kanälen oder Rohren **30** ist ein Ventil **26** an diesem Kanal oder Rohr **30** außerhalb des Sinterofens angeordnet. Beispielsweise kann mittels einer angeschlossenen Pumpe an dem mittleren Kanal oder Rohr **30** Schutzgas aus der Sinterkammer **5** abgesaugt werden. Falls die Konusflächen der zweiten Abdeckung **22** und der Sinterschale **4** die Sinterkammer **5** nicht abdichten, wird nur Schutzgas vom umspülten Schutzraum **6** an- und abgesaugt.

Bei dieser Ausführung kann ebenfalls Flüssigkeit zum Beispiel zum Abkühlen des Sintereinsatzes mittels der beiden äußeren Kanäle oder Rohre **9**, **10**, **30**, die im Schutzraum **6** münden, ein- und ausgeführt werden. Wenn anstatt der zwei dargestellten Standfüße **7** ein geschlossener Ring angeordnet wäre, der eventuell mit dem Basisteil **1** fest verbunden wäre, beispielsweise durch Schweißen, dann würde der unter der Sinterschale **4** befindende Schutzraum **6** eine vom Sinterraum **3** getrennte Kühlkammer darstellen.

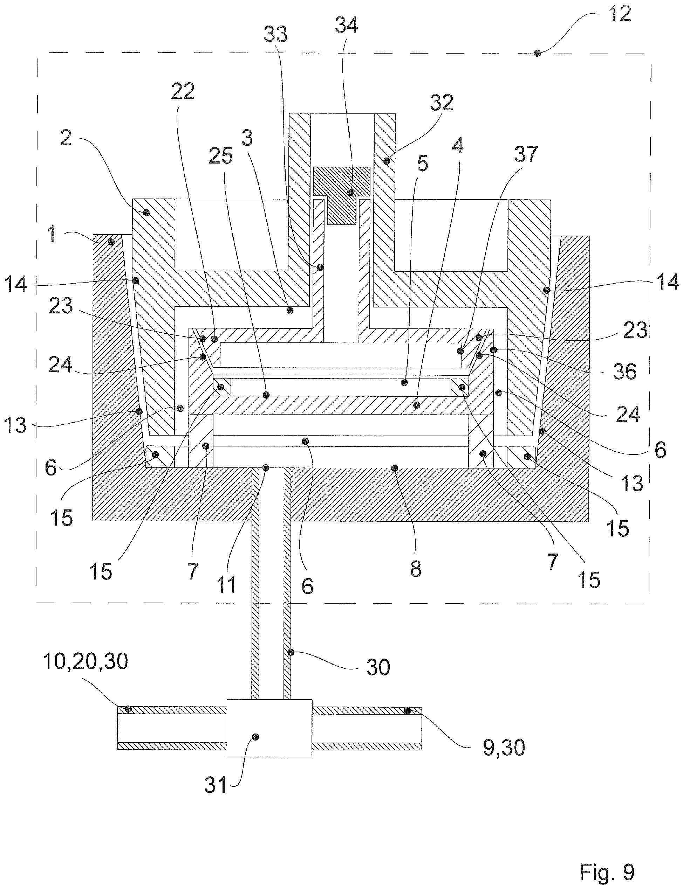

Der Aufbau des Sintereinsatzes in der Fig. 9 umfasst ein U-förmiges Basisteil **1** mit konischer Innenwand **13** und eine erste Abdeckung **2** mit einer komplementär konischen Außenwandung **14**, wobei ein Distanzring **15** auf dem Innenboden **8** des Basisteils **1** so angeordnet ist, dass die erste Abdeckung **2** auf diesen steht ohne den Innenboden **8** des Basisteils **1** zu berühren. Am Innenboden **8** mündet ein Kanal oder Rohr **30**, das vertikal/senkrecht nach unten aus dem Sinterofen **12** heraus ragt. Am Ende des Rohres **30** ist ein Zweiwegeventil **31** angeordnet. Horizontal in eine Richtung verläuft von diesem Ventil **31** aus ein Einlasskanal oder -rohr **9** und in die andere Richtung ein Auslasskanal oder -rohr **10** oder eine Pumpenanschlussleitung **20.** In dem eingeschlossenen Sinterraum **3** befindet sich, wie bereits bei den vorherigen Figuren, eine Sinterschale **4**, die auf zwei Standfüßen **7** aufliegt und eine konisch verlaufende Innenwand **24** aufweist. Es ist ebenfalls in der Sinterschale **4** ein Distanzring **15** angeordnet, um das Absinken einer zweiten Abdeckung **22** entgegenzuwirken.

Die zweite Abdeckung **22** sowie auch die erste Abdeckung **2** sind in der Mitte in axialer Richtung nach oben hin mit jeweils einem Durchgang **32**, **33** durchsetzt, wobei der Durchgang **32** der ersten Abdeckung **2** so groß ist, dass der Durchgang **33** der zweiten Abdeckung **22** in diesem verlaufen kann und ein schmaler Luftspalt zwischen beiden Durchgängen **32**, **33** noch vorhanden ist. Dieser Luftspalt verschwindet aufgrund der Wärmeausdehnungskoeffizienten sobald genügend Wärme auf den Sintereinsatz eingebracht wurde. Der Durchgang **33** der zweiten Abdeckung **2** endet in dem Durchgang **32** der ersten Abdeckung. Des Weiteren ist auf dem Ende des Durchgangs **33** ein Bolzen **34** aufgelegt, der als Rückschlagventil fungiert. Das Schutzgas wird durch den Einlasskanal oder -rohr **9** eingeführt, verteilt sich im Schutzraum **6**, strömt über Luftspalte aus dem Sintereinsatz heraus oder in die Sinterkammer **5**, spült die Sinterkammer **5** und strömt über das Bolzen- Rückschlagventil **34** aus dem Sintereinsatz heraus. Das Gewicht des Bolzen-Rückschlagventils **34** ist so ausgebildet, dass der Bolzen **34** dicht auf dem Ende des Durchgangs **33** aufliegt, sobald keine Strömung den Bolzen **34** nach oben drückt. Das bedeutet auch, dass das Schutzgas sowie Verunreinigungen nicht zurück über das Bolzen-Rückschlagventil **34** in die Sinterkammer **5** gelangen können.

Bei Erwärmung des Sintereinsatzes verschließt sich der Durchgang **33** mit dem Bolzen-Rückschlagventil **34** und die Konusfläche der zweiten Abdeckung **22** mit der Konusfläche der Sinterschale **4**, so dass die Sinterkammer **5** sauerstoffdicht verschlossen ist. Falls dies jedoch nicht sauerstoffdicht verschlossen sein sollte, kann an dem Auslasskanal oder -rohr **10** oder an der Pumpenanschlussleitung **20** eine Pumpe angeschlossen werden. Mittels der Pumpe entsteht ein Unterdruck im Sinterraum **3**, wodurch die erste Abdeckung **2**, die zweite Abdeckung **22** und der Bolzen **34** angesaugt werden und somit die Dichtigkeit erhöhen.

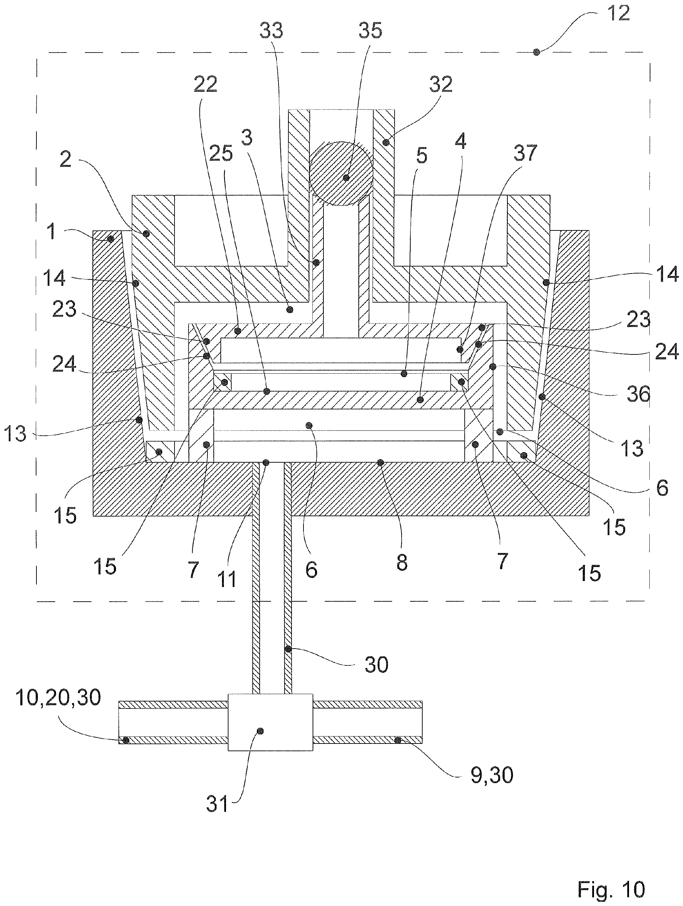

Die Fig. 10 umfasst den gleichen Aufbau wie Fig. 9, wobei statt eines Bolzens **34** eine Kugel **35** als Rückschlagventil verwendet wird.

Eine Möglichkeit besteht auch darin, die Außenwand **36** der Sinterschale **4** mit einer Konusfläche zu versehen und dementsprechend auch die Innenwandung **37** der zweiten Abdeckung **22** komplementär konisch auszubilden.

### Bezugszeichenliste

- 1: Basisteil
- 2: erste Abdeckung
- 3: Sinterraum
- 4: Sinterschale
- 5: Sinterkammer
- 6: Schutzraum
- 7: Standfuß
- 8: Innenboden Basisteil
- 9: Einlasskanal oder -rohr / Begasungskanal oder -rohr
- 10: Auslasskanal oder -rohr / Entgasungskanal oder -rohr / Absaugungskanal oder -rohr
- 11: Stirnöffnung der Kanäle oder Rohre im Sinterraum
- 12: Sinterofen
- 13: Innenwand Basisteil
- 14: Außenwandung erste Abdeckung
- 15: Distanzring
- 16: waagrechter Teil der ersten Abdeckung
- 17: Vertiefung Basisteil
- 18: Innenwandung erste Abdeckung
- 19: Auflagefläche
- 20: Pumpenanschlussleitung
- 21: Außenwand Basisteil
- 22: zweite Abdeckung
- 23: Außenwandung zweite Abdeckung
- 24: Innenwand Sinterschale
- 25: Sinterschaleninnenboden
- 26: Ventil
- 27: Bolzen
- 28: Bolzenkopf
- 29: Bolzenkörper
- 30: Rohr
- 31: Zweiwegeventil
- 32: Durchgang erste Abdeckung
- 33: Durchgang zweite Abdeckung
- 34: Bolzen-Rückschlagventil
- 35: Kugel-Rückschlageventil
- 36: Außenwand Sinterschale
- 37: Innenwandung zweite Abdeckung

## Patentansprüche

1. Verfahren zum Sintern von Metall und/oder Keramik in einem Sinterofen (12), bei dem eine Verbindung von einem Sinterraum (3) eines im Sinterofen (12) angeordneten Sintereinsatzes mittels einem oder mehreren Kanälen oder Rohren (9, 10, 20, 30) zur Umgebung außerhalb des Sinterofens (12) hergestellt wird, **gekennzeichnet durch** einen Sintereinsatz, ein Basisteil (1) umfassend, das mit einer ersten Abdeckung (2), den Sinterraum (3) bildet, und wobei das Basisteil (1) mindestens eine nach innen konisch verlaufende Innenwand (13) oder Außenwand (21) aufweist, die mit einer entsprechenden Außenwandungsfläche (14) und/oder Innenwandungsfläche (18) der ersten Abdeckung (2) im gesamten Konusbereich in Kontakt treten kann, wobei
- abwechselnd Schutzgas in den Sinterraum (3) eingeführt und Schutzgas mit etwaigen Verunreinigungen mittels der Verbindung abgesaugt wird, oder wobei
- zeitgleich Schutzgas in den Sinterraum (3) eingeführt und Schutzgas mit etwaigen Verunreinigungen mittels der Verbindung abgesaugt wird, oder
- abwechselnd und zeitgleich aufeinander folgend oder abwechselnd Schutzgas in den Sinterraum (3) eingeführt wird und mit etwaigen Verunreinigungen mittels der Verbindung abgesaugt wird und wobei
ein Sintereinsatz mit einer internen Sinterkammer (5) verwendet wird, welche mit Schutzgas gespült, und ein oder mehrere zu sinternden Teile/Objekte entbindert werden, während ein vorgeordneter Schutzraum (6) vom Schutzgas geflutet wird.

2. Verfahren nach Anspruch 1, **dadurch gekennzeichnet, dass** nach und/oder während dem Entbinderungsprozess zusätzlich mit einer Vakuumpumpe das Schutzgas und Verunreinigungen abgesaugt werden.

3. Verfahren nach Anspruch 2, **dadurch gekennzeichnet, dass** mittels eines durch Vakuum erzeugten Unterdrucks eine Dichtigkeit zwischen einzelnen Bauteilen oder Komponenten des Sintereinsatzes herbeigeführt und/oder kompensiert wird.

4. Verfahren nach einem der vorangehenden Ansprüche, **dadurch gekennzeichnet, dass** die zu sinternden Teile/Objekte aus Metall und/oder aus Keramik ausgeführt werden.

5. Verfahren zum Sintern von Metall und/oder Keramik in einem Sinterofen (12), insbesondere zur Verwendung in der Dentaltechnik, bei dem eine Verbindung von einem Sinterraum (3) eines im Sinterofen (12) angeordneten Sintereinsatzes mit einem Basisteil (1), das mit einer ersten Abdeckung (2) den Sinterraum (3) bildet, mittels einem oder mehreren Kanälen oder Rohren (9, 10, 20, 30) zur Umgebung außerhalb des Sinterofens (12) hergestellt wird, **dadurch gekennzeichnet, dass**
das Basisteil (1) mindestens eine nach innen konisch verlaufende Innenwand (13) oder Außenwand (21) aufweist, die mit einer entsprechenden Außenwandungsfläche (14) und/oder Innenwandungsfläche (18) der ersten Abdeckung (2) im gesamten Konusbereich in Kontakt treten kann, wobei eine Flüssigkeit in einen Teil des Sinterraums (3) eingeführt und mittels der Verbindung abgesaugt oder abgeführt wird

## Claims

1. A method for sintering metal and/or ceramic material in a sintering furnace (12), in which a connection of a sintering space (3) of a sintered insert arranged in the sintering furnace (12) is created by means of one or more channels or pipes (9, 10, 20, 30) to the surrounding area outside of the sintering furnace (12), **characterised by** a sintered insert comprising a base part (1) which with a first cover (2) forms the sintering space (3), and wherein the base part (1) has at least one inner wall (13) or outer wall (21) running conically inwards, which can come into contact with a corresponding outer wall surface (14) and/or inner wall surface (18) of the first cover (2) over the whole cone region, wherein
- alternately, protective gas is introduced into the sintering space (3) and protective gas with possible impurities is extracted by means of the connection, or wherein
- simultaneously, protective gas is introduced into the sintering space (3) and protective gas with possible impurities is extracted by means of the connection, or
- alternately and simultaneously, successively, or alternately protective gas is introduced into the sintering space (3) and protective gas with possible impurities is extracted by means of the connection, and wherein
a sintered insert is used with a sintering chamber (5) which is flushed with protective gas, and one or more parts/objects to be sintered are debinded, while a protective space (6) arranged upstream is flooded with protective gas.

2. The method according to claim 1, **characterised in that** after and/or during the debinding process, the protective gas and impurities are additionally extracted with a vacuum pump.

3. The method according to claim 2, **characterised in that**, by means of a negative pressure generated by vacuum, a seal is induced and/or compensated between individual constituents or components of the sintered insert.

4. The method according to one of the preceding claims, **characterised in that** the parts/objects to be sintered are made of metal and/or ceramic material.

5. A method for sintering metal and/or ceramic material in a sintering furnace (12), in particular for use in the field of dental technology, in which a connection of a sintering space (3) of a sintered insert, arranged in the sintering furnace (12) to a base part (1), which with a first cover (2) forms the sintering space (3), is created by means of one or more channels or pipes (9, 10, 20, 30) to the surrounding area outside of the sintering furnace (12), **characterised in that** the base part (1) has at least one inner wall (13) or outer wall (21) running conically inwards, which can come into contact with a corresponding outer wall surface (14) and/or inner wall surface (18) of the first cover (2) over the whole cone region, wherein a liquid is introduced into a part of the sintering space (3) and extracted or purged by means of the connection.

## Revendications

1. Procédé de frittage de métal et/ou de céramique dans un four de frittage (12), dans lequel une liaison est établie au moyen d'un ou de plusieurs canaux ou tubes (9, 10, 20, 30) entre une chambre de frittage (3) d'un insert de frittage disposé dans le four de frittage (12) et l'environnement à l'extérieur du four de frittage (12), **caractérisé par** un insert de frittage comprenant une partie de base (1) qui forme avec un premier couvercle (2) la chambre de frittage (3), et dans lequel la partie de base (1) présente au moins une paroi intérieure (13) ou une paroi extérieure (21) qui s'étend en cône vers l'intérieur, laquelle paroi peut entrer en contact avec une surface de paroi extérieure (14) et/ou une surface de paroi intérieure (18) correspondante du premier couvercle (2) dans toute la zone conique, dans lequel
- alternativement, du gaz de protection est introduit dans la chambre de frittage (3) et du gaz de protection avec d'éventuelles impuretés est aspiré au moyen de la liaison, ou dans lequel
- simultanément, du gaz de protection est introduit dans la chambre de frittage (3) et du gaz de protection avec d'éventuelles impuretés est aspiré au moyen de la liaison, ou bien
- alternativement et simultanément l'un après l'autre ou alternativement du gaz de protection est introduit dans la chambre de frittage (3) et est aspiré avec d'éventuelles impuretés au moyen de la liaison, et dans lequel
on utilise un insert de frittage avec une chambre de frittage interne (5) qui est purgée avec un gaz protecteur, et une ou plusieurs pièces/objets à fritter sont déliés, tandis qu'un espace de protection (6) situé en amont est inondé avec le gaz protecteur.

2. Procédé selon la revendication 1, **caractérisé en ce qu'**après et/ou pendant le processus de déliage, le gaz de protection et les impuretés sont en outre aspirés à l'aide d'une pompe à vide.

3. Procédé selon la revendication 2, **caractérisé en ce que**, au moyen d'une dépression générée par le vide, on provoque et/ou on compense une étanchéité entre les différents éléments ou composants de l'insert de frittage.

4. Procédé selon l'une des revendications précédentes, **caractérisé en ce que** les pièces/objets à fritter sont réalisés en métal et/ou en céramique.

5. Procédé de frittage de métal et/ou de céramique dans un four de frittage (12), en particulier pour l'utilisation dans la technique dentaire, dans lequel une liaison est établie au moyen d'un ou de plusieurs canaux ou tubes (9, 10, 20, 30) entre une chambre de frittage (3) d'un insert de frittage disposé dans le four de frittage (12) et ayant une partie de base (1) qui forme la chambre de frittage (3) avec un premier couvercle (2), et l'environnement à l'extérieur du four de frittage (12), **caractérisé en ce que**
la partie de base (1) présente au moins une paroi intérieure (13) ou une paroi extérieure (21) qui s'étend en cône vers l'intérieur et qui peut entrer en contact avec une surface de paroi extérieure (14) et/ou une surface de paroi intérieure (18) correspondante du premier couvercle (2) dans toute la zone conique, un fluide étant introduit dans une partie de la chambre de frittage (3) et étant aspiré ou évacué au moyen de la liaison.
